# EUROPEAN PATENT APPLICATION

(11) **EP 1 109 359 A2**
(43) Date of publication of application: **20.06.2001**
(21) Application number: 00127485.1
(22) Date of filing: 14.12.2000
(51) Int. Cl.: H04L 12/56, H04L 29/06

(54) **Congestion control for internet access**

(30) Priority: 18.12.1999 GB 9929882; 06.10.2000 GB 0024465
(71) Applicant: ROKE MANOR RESEARCH LIMITED, Romsey, Hampshire SO51 0ZN (GB)
(72) Inventor: West, Mark Alan, Southampton, S051 9NT (GB); Hancock, Robert, Bitterne Park, Southampton, SO18 1NW (GB); McCann, Stephen, Rownhams, Southampton SO16 8DS (GB)
(74) Representative: Condon, Neil

(57) **Abstract**

Described herein is apparatus and method for implementing location specific congestion control in a transmission control protocol (TCP) connection. The TCP connection extends between an internet connection (12) and one or more mobile terminals (22, 24, 26). Each mobile terminal (22, 24, 26) is connected to a base station (18) which is then connected to the internet connection (12). An enhancer (14) is provided in the TCP connection to divide it into two connections (16, 20) so that congestion control can be implemented in the connection (16) remote from the mobile terminals (22, 24, 26). There is no requirement of congestion control between the base station (18) and the mobile terminals (22, 24, 26) as they comprise point-to-point connections. The enhancer (14) may be co-located with the base station (18).

## Description

The present invention relates to improvements in or relating to internet access and is more particularly concerned with internet access via networks with long round trip delays or high packet drop rates particularly where the protocol stack is only available for modification on one side.

It is known to provide internet links via such networks. However, where TCP/IP (transmission control protocol over internet protocol) traffic flows between the internet as a whole and an essentially private, stub network across lossy and long-latency links, access to the Internet is sub-optimal. For example, if a mobile network, built around point-to-point, high latency wireless links such as a geostationary satellite link or terrestial mobile network link, is connected to the internet, the latencies and packet errors involved severely restrict the performance of the TCP/IP connection. The TCP/IP connection uses flow control mechanisms for congestion avoidance and congestion recovery. These cause poor performance when applied to long-latency connections, but are essential to prevent the internet as a whole from collapsing.

The congestion avoidance mechanisms within TCP are essential to prevent the so-called 'congestion collapse' of the internet. This occurs when routers are overwhelmed with data and, rather than responding to the overload, TCP continues to aggressively transmit (and re-transmit) data.

It is therefore an object of the present invention to provide better internet access where the effect of such congestion is essentially eliminated.

In accordance with one aspect of the present invention, there is provided a method of providing location specific congestion control in a single end-to-end transmission control protocol connection, the method comprising splitting the single end-to-end connection into two connections such that only one of the connections has standard transmission control protocol congestion control.

In one embodiment of the present invention, the other of the first or second connection comprises wireless connection. Advantageously, the wireless connection comprises a point-to-point connection. In this case, the point-to-point connection may comprise a connection between a base station and a mobile terminal in a telecommunications cell.

In accordance with another aspect of the present invention, there is provided a mobile telecommunications cell comprising a base station and at least one mobile terminal, the cell including means for providing a transmission control protocol connection to the internet, and means for providing congestion control by splitting the transmission control protocol connection into two connections, the means for providing standard transmission control protocol congestion control being operable only in one of the two connections.

The transmission control protocol connection extends from the base station to an internet, the connection in which transmission control protocol congestion control operates being located between the base station and the internet.

Preferably, the means for providing congestion control in this direction comprises an enhancer. Advantageously, the enhancer is co-located with the base station.

The term 'internet' as used herein is intended to encompass both the worldwide web as well as local networks which may also be considered as internets.

For a better understanding of the present invention, reference will now be made, by way of example only, to the accompanying drawings in which:-
Figure 1 is a block diagram illustrating an asymmetrical enhancer in accordance with the present invention;
Figure 2 illustrates an end-to-end transmission control protocol (TCP) connection;
Figure 3 illustrates a split transmission control protocol (TCP) connection; and
Figure 4 illustrates a symmetrical enhancement system.

As discussed above, congestion can occur when TCP/IP traffic flows in high latency wireless links connected to the internet, the latencies severely restricting the performance of the TCP/IP connections. In accordance with the present invention, an enhancer may be used to improve the performance of the TCP/IP connections.

Since a mobile network uses point-to-point links between a base station and a mobile terminal, the link between the base station and the mobile terminal does not itself suffer from congestion. However, congestion is often present on the link between the base station and the internet.

In accordance with the present invention, the provision of an 'enhancer' at the base station improves the performance - the enhancer acting as a gateway between the internet at large and the network of mobile terminals associated with the base station.

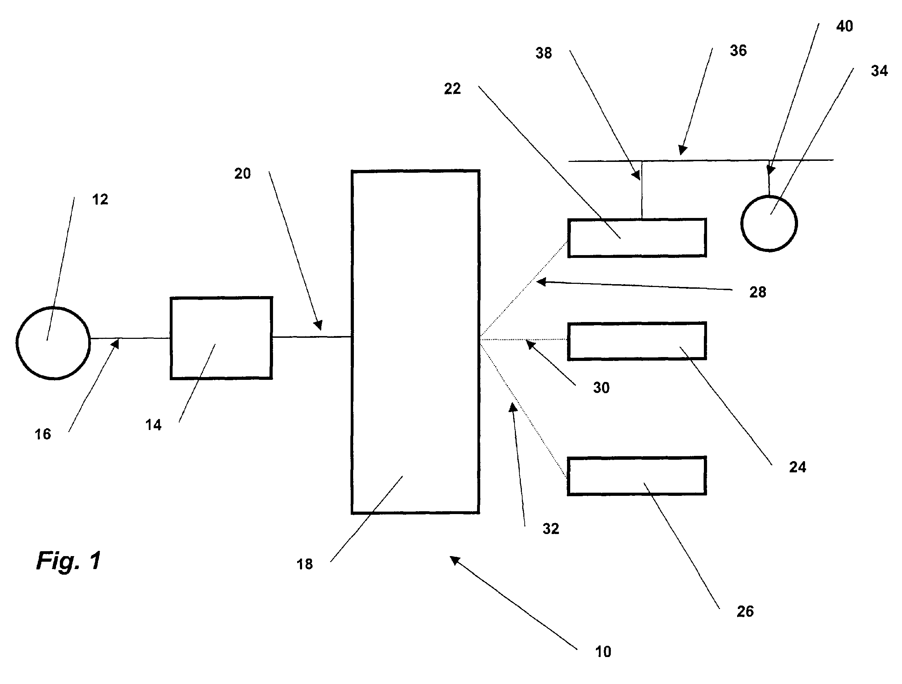

Figure 1 illustrates a network 10 including an enhancer in accordance with the present invention. The network 10 comprises an internet connection 12 which is connected to an enhancer 14 via link 16. The enhancer 14 is connected to a base station 18 via link 20. Link 20 may be a direct connection or it may a network through which the connection between the enhancer 14 and base station 18 is made. The link 20 can operate using standard protocols. Base station 18 has three mobile terminals 22, 24, 26 associated with it - each of which is connected to the base station 18 by means of respective wireless connections 28, 30, 32 (as shown in dotted lines). Mobile terminal 22 is connected to a host 34 via links 36, 38, 40 as shown. However, it will be appreciate that although links 36, 38, 40 are shown as separate connections, in reality, they form a single link or network. The host 34 may comprise a computer terminal, for example, a lap-top computer, which is to be connected to the internet 12 via the mobile terminal 22.

It will readily be appreciated that although only three mobile terminals 22, 24, 26 are shown associated with the base station 18, the number of terminals can be greater than or less than three in accordance with each mobile terminal lying within a telecommunications cell (not shown) of which the base station 18 forms a part.

In accordance with the present invention, the enhancer 14 terminates any TCP connection that it receives, either from the network of mobile terminals 22, 24, 26 or the internet 12 by responding to the originating host as if it were the ultimate end-system. The enhancer 14 then regenerates the connection to the end-system. By splitting the connection at this gateway, congestion control can be applied to the internet side, not violating any of the internet rules, but need not be applied to the network of mobile terminals 22, 24, 26 where it is unnecessary or can be applied according to network specific algorithms.

By doing this, the enhancer 14 can apply flow-control in both directions through use of the TCP sliding window, and allow connections immediate use of the full link bandwidth into the network of mobile terminals 22, 24, 26.

It will be appreciated that this enhancement is asymmetric as only data transferring from the internet 12 to the network of mobile terminals 22, 24, 26 will be so affected. Any traffic flowing into the internet 12 will be separate, congestion-controlled connections. Traffic flow to the mobile terminals 22, 24, 26 is most advantageous direction to enhance, since accesses from the network mobile terminals 22, 24, 26 is likely to take the form of requests for information from the internet 12 - the responses being expected to be significantly larger than the requests.

Although the enhancer 14 is shown as being separate from the base station 18, it will readily be understood that it may be advantageous for the enhancer to be co-located with the base station 18.

Connection splitting is the key mechanism for enhancing TCP performance. Rather than allowing the TCP connection to run end-to-end from mobile terminal 24 to the internet 12 as shown in Figure 1, the connection is segmented. The enhancer 14 terminates a TCP connection on one interface, for example, from the internet 14, and regenerates it on another interface, for example, to mobile terminal 24.

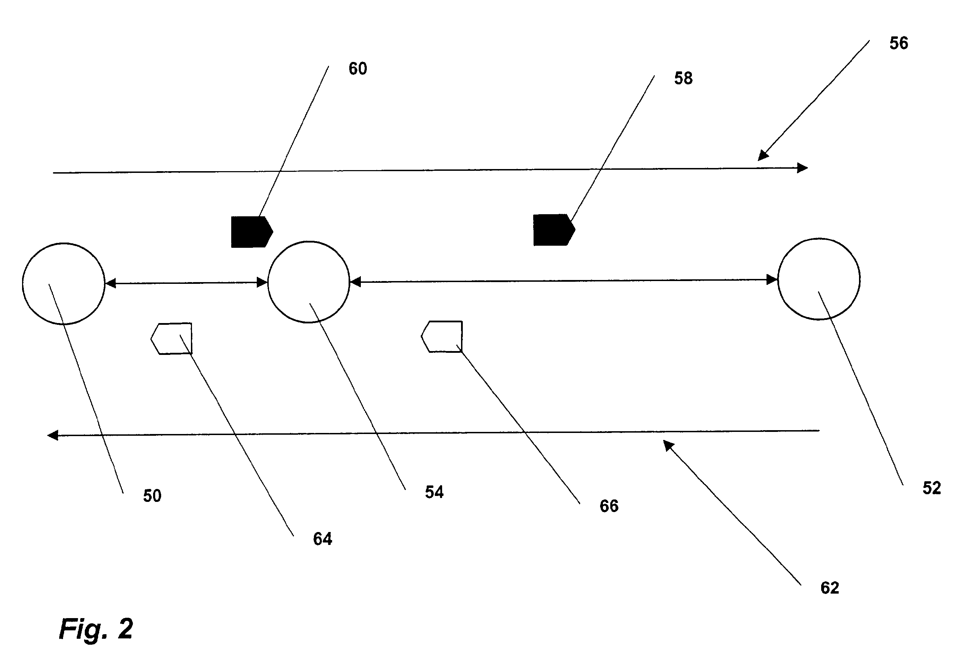

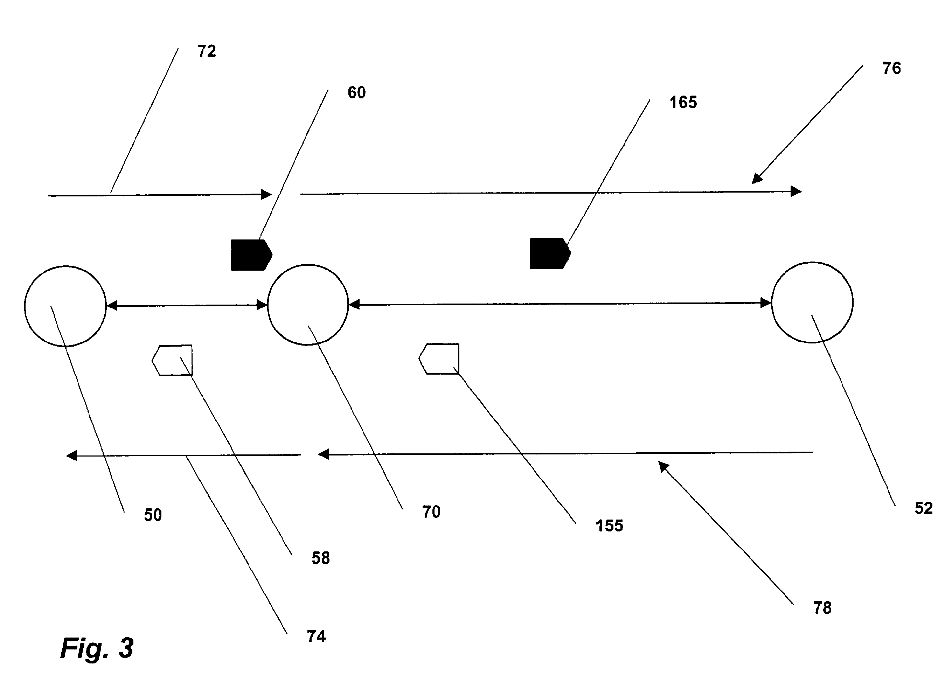

Figures 2 and 3 illustrate the difference between an end-to-end TCP connection and a split TCP connection.

In Figure 2, node 50 is connected to node 52 via a router 54. When data packets are to be sent from node 50 to node 52, as indicated by the arrow 56, each packet 58, 60 passes from node 50 via the router 54 to node 52 before acknowledgement packets are sent back to node 50, as indicated by the direction of arrow 62. Acknowledgement packets 64 and 66 are shown which correspond to data packets (not shown) which preceded data packets 58, 60.

It will readily be appreciated that in this case, node 50 must wait for acknowledgements from node 52 as the router 54 merely relays the data packets 58, 60. It is to be noted that each data packet 58, 60 is sent sequentially from node 50 to node 52 via router 54 and its corresponding acknowledgement is also returned sequentially from node 52 to node 50, that is, acknowledgements 62, 64 are transmitted in the order in which their corresponding data packet 58, 60 was sent from node 50 to node 52.

Although only two data packets 58, 60 and two acknowledgements 64, 66 are shown, any number of data packets and acknowledgements can be present in on the TCP connection between nodes 50 and 52. Moreover, any number of routers 54 may also be present in the connection between nodes 50 and 52.

In Figure 3, node 50 is still connected to node 52, but in this arrangement, the router is replaced with an enhancer 70. In this case, for each data packet 60, 165 on the TCP connections between nodes 50 and 52 does not need to be sequential as the enhancer 70 acts as an end pointfor node 52and for node 50 and provides an acknowledgement as each data packet is received.

As shown in Figure 3, a data packet 60 is sent by node 50 to enhancer 70 as indicated by the direction of arrow 72. The enhancer 70 sends an acknowledgement 58 to node 50 in the direction indicated by arrow 74. In this case, the acknowledgement 58 corresponds to the previously sent data packet.

As the enhancer 70 effectively terminates a connection, two separate connections are provided which may have separate sequence number spaces. As shown in Figure 3, a second data packet 165 is shown on the connection between the enhancer 70 and node 52 which has a different sequence to data packet 60. In this case, the enhancer 70 acts as the start point for the connection to node 52 as indicated by arrow 76. As before, node 52 returns an acknowledgement 155, as indicated by arrow 78, which relates to a previously received data packet. However, this time the acknowledgement is only returned to the enhancer 70. Nodes 50 and 52 still believe that they are communicating with each other, but the long latency connection between is effectively hidden from the end-systems.

By doing this, flow control and congestion management is no longer performed end-to-end, as would happen with an ordinary TCP connection as shown in Figure 2. This is important, as the wireless link has very different characteristics from the other, terrestrial hops that data packets will use. For TCP, the increase in round-trip time caused by the wireless link will adversely affect the slow-start period. This is the initial period of a TCP connection where the transfer rate is ramped up exponentially.

The TCP connections on either side of the enhancer 70 are isolated so that, for example, 500 byte packets entering the enhancer 70 from the internet, may appear as 1 kbyte packets to the mobile network. Data ordering does not change across the enhancer 70, so that mobile terminal 22 (Figure 1) still perceives a single TCP/IP connection to the internet.

An important point for the use of asymmetric enhancers is that once a packet has reached the interface to the wireless link, the data is transferred to the mobile terminal via a point-to-point link. This link is not shared and cannot suffer from congestion. It is also important to note that the network attached to the mobile terminals is a 'stub' network, that is, there are no networks beyond it that are routed through it.

Because of these points, it will readily be appreciated that congestion control mechanisms are not required once the wireless link has been reached. This, then, is the basis of enhancement. The connection is split at the enhancer. A TCP flow that is regenerated back into the internet remains a standard, responsible, TCP. A TCP that is regenerated towards a mobile terminal, however, has the congestion avoidance mechanisms removed, that is, neither slow-start (the exponential rate increase at connection start or packet drop) nor fast-recovery (halving the transmission rate on single packet loss) are implemented.

The link between the base-station 18 and a mobile terminal 22, 24, 26 (as shown in Figure 1) may be either assured or unassured, depending upon the wireless access technology used. The TCP retransmission mechanisms may be modified for the connection to the mobile terminal in order to improve the response to dropped packets. This would probably consist of a more tightly bounded retransmission strategy for an unassured link with no backoff in the event of packet loss. For an assured link, the retransmission mechanism may use an extended timeout to reduce the impact of lower layer retransmissions.

Critically, regardless of the changes to the congestion mechanisms, the protocol used by the enhancer is fully interoperable with the host attached to the mobile station, all the datagrams are perfectly standard TCP/IP. The performance is enhanced because TCP congestion avoidance is not performed over a link for which it is inappropriate.

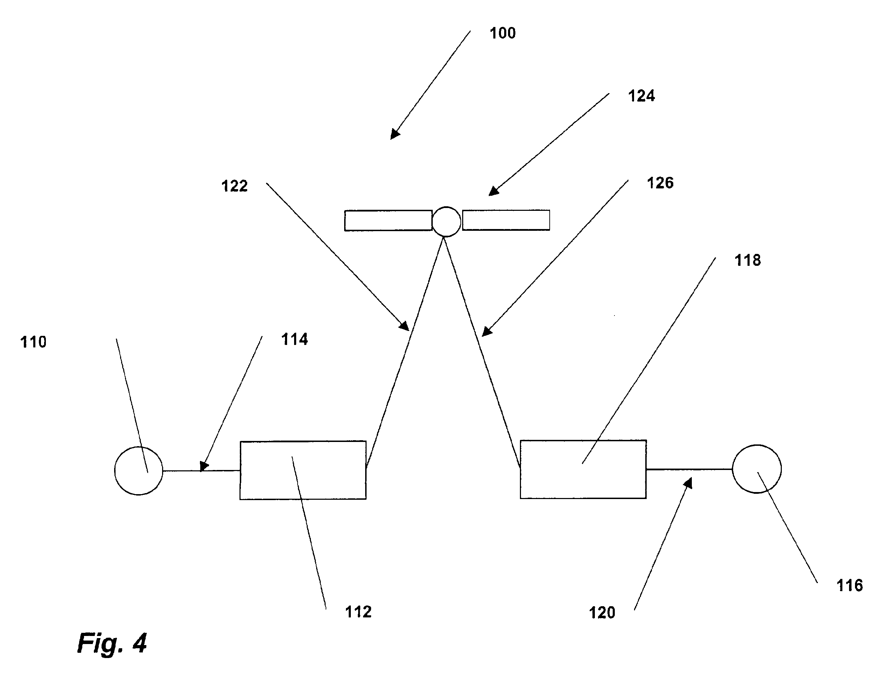

The present invention can be further extended by placing two such enhancers 'back-to-back'. This would then give symmetric enhancement. One situation in which a symmetrical enhancer could readily be utilised is in a geostationary satellite hop. This is shown in Figure 4.

Figure 4 illustrates a geostationary satellite hop 100 in which a first host 110 is connected to a first enhancer 112 by link 114, and a second host 116 is connected to a second enhancer 118 by link 120. The first 'enhancer' 112 is connected to the second 'enhancer' 118 via links 122, satellite 124 and link 126. It will readily be appreciated that links 122 and 126 are wireless links. It is to be noted that although the satellite 124 and links 122, 126 are shown as individual elements, it will be readily understood that they are considered to be a single link or connection by the first and second 'enhancers' 112, 118 as a radio delay unit.

In this situation, it is preferable to link the enhancers 112, 118 by a dedicated protocol, optimised for high-latency point-to-point links. The reason for this is efficiency. Given that the link is high latency, it is desirable to reduce the amount of retransmitted traffic in the event of error or loss on the link. Since this implies using a non-TCP protocol, and since the systems would be deployed either side of a point-to-point link, there is no benefit in using IP (internet protocol), either. Therefore, an efficient point-to-point link between the enhancers 112, 118 offers savings in link bandwidth, by using an optimally sized header (avoiding the TCP/IP header overhead) and in link utilisation. The latter benefit comes both from reduction in unnecessary retransmissions and from reducing the volume of reverse traffic (TCP/IP generates a comparatively large volume of acknowledgements). The potential improvement is dependent upon a number of variables, including latency, link rate and error-rate.

The number of acknowledgements generated (and the efficacy of these) can be improved by extending the standard idea of 'piggybacking' a single acknowledgement onto an ordinary data frame in the reverse direction. Rather than just including a single value to acknowledge a single frame, a delta value is incorporated. This indicates how many contiguous frames (starting with the given acknowledgement number) have been successfully received. This can achieve large reductions in reverse traffic bandwidth and, by overlapping successive acknowledgement values, provide a more robust system with less retransmissions in the event of a single acknowledgement packet being dropped.

## Claims

1. A method of providing location specific congestion control in a single end-to-end transmission control protocol connection, the method comprising splitting the single end-to-end connection into two connections such that only one of the connections has standard transmission control protocol congestion control.

2. A method according to claim 1, wherein the other of the first or second connection comprises wireless connection.

3. A method according to claim 2, wherein the wireless connection comprises a point-to-point connection.

4. A method according to claim 3, wherein the point-to-point connection comprises a connection between a base station and a mobile terminal in a telecommunications cell.

5. A mobile telecommunications cell comprising a base station and at least one mobile terminal, the cell including means for providing a transmission control protocol connection to the internet, and means for providing congestion control by splitting the transmission control protocol connection into two connections, the means for providing standard transmission control protocol congestion control being operable only in one of the two connections.

6. A cell according to claim 5, wherein the transmission control protocol connection extends from the base station to an internet, the connection in which transmission control protocol congestion control operates being located between the base station and the internet.

7. A cell according to claim 6, wherein the means for providing congestion control in this direction comprises an enhancer.

8. A cell according to claim 7, wherein the enhancer is co-located with the base station.

9. A method of providing location specific congestion control in a single end-to-end transmission control protocol connection substantially as hereinbefore described with reference to Figures 1 and 3 of the accompanying drawings.

10. A mobile telecommunications cell comprising a base station and at least one mobile terminal substantially as hereinbefore described with reference to Figures 1 and 3 of the accompanying drawings.
